# EUROPÄISCHE PATENTSCHRIFT

(11) **EP 3 641 983 B1**
(45) Veröffentlichungstag und Bekanntmachung des Hinweises auf die Patenterteilung: **08.09.2021**
(21) Anmeldenummer: 18742473.4
(22) Anmeldetag: 17.07.2018
(51) Int. Cl.: F16C 19/10, F16C 19/16, F16C 19/36

(54) **RUNDSCHALTTISCH MIT KRAFT-OPTIMIERTEM ANTRIEB**
ROTARY INDEXING TABLE WITH POWER-OPTIMIZED DRIVE
PLATEAU ROTATIF COMPRENANT UN ENTRAÎNEMENT OPTIMISÉ EN FORCE

(30) Priorität: 10.08.2017 DE 102017118262
(43) Veröffentlichungstag der Anmeldung: 29.04.2020
(73) Patentinhaber: Weiss GmbH, 74722 Buchen (Odw.) (DE)
(72) Erfinder: BAUER, Stefan, 74838 Limbach-Laudenberg (DE); GOISSER, Dominik, 74722 Buchen (DE); ANDRES, Thomas, 74722 Buchen (DE)
(74) Vertreter: Manitz Finsterwald Patent- und Rechtsanwaltspartnerschaft mbB
(86) Internationale Anmeldenummer: PCT/EP2018/069338
(87) Internationale Veröffentlichungsnummer: WO 2019/029953

(56) Entgegenhaltungen:
- EP-A1- 2 255 923
- DE-C- 150 839
- DE-U1-202010 016 682
- FR-A5- 2 248 745

## Beschreibung

Die vorliegende Erfindung betrifft einen Rundschalttisch und insbesondere einen Rundschalttisch, der hinsichtlich seiner benötigten Antriebsleistung optimiert ist. Rundschalttische können zum Einsatz kommen, um ein zu bearbeitendes Werkstück rotatorisch von einer ersten Ruheposition in eine zweite Ruheposition zu bewegen. Derartige Rundschalttische sind grundsätzlich aus dem Stand der Technik in unterschiedlichen Ausführungsformen bekannt und weisen üblicherweise einen zur Aufnahme eines Werkstücks geeigneten Abtriebsflansch auf, der um eine Drehachse drehbar an einem Gehäuse des Rundschalttischs gelagert und antriebswirksam mit zumindest einem Mitnehmer verbunden ist, der in eine Antriebsnut einer Kurventrommel eingreift, die von einem Motor des Rundschalttischs antreibbar ist. Der Abtriebsflansch stellt somit gewissermaßen eine Art Drehteller dar.

EP 2 255 923 A1 offenbart einen Rundschalttisch nach dem Oberbegriff des Anspruchs 1.

Eine Anforderung, die an derartige Rundschalttische gestellt wird, besteht darin, dass der Werkstücktransport möglichst energiesparend erfolgen soll.

Der Erfindung liegt daher die Aufgabe zugrunde, einen Rundschalttisch anzugeben, der hinsichtlich seiner benötigten Antriebsleistung optimiert ist und möglichst energiesparend betrieben werden kann.

Diese Aufgabe wird gemäß einem ersten Aspekt mit einem Rundschalttisch mit den Merkmalen des Anspruchs 1 und insbesondere dadurch gelöst, dass die Kurventrommel und insbesondere der antriebswirksame Abschnitt der Kurventrommel, der durch die axiale Erstreckung der Antriebsnut definiert ist, asymmetrisch zu der Drehachse des Abtriebsflanschs angeordnet ist. Auf diese Weise gelingt es, die effektive Hebelarmlänge, über die der Abtriebsflansch von der Kurventrommel angetrieben wird, zu optimieren und insbesondere zu maximieren. Insbesondere wird im Vergleich zu einem Rundschalttisch mit gleich langer, jedoch symmetrisch angeordneter Kurventrommel die durchschnittliche effektive Hebelarmlänge während der Phase maximiert, in der die Mitnehmer infolge der Drehung der Kurventrommel durch die Antriebsnut desselben gefördert werden. Aufgrund der Vergrößerung der effektiven Hebelarmlänge im Eingriffsbereich reduziert sich somit unabhängig vom jeweiligen Drehmoment die erforderliche Antriebskraft und damit die interne Reibung zwischen Antriebsnut und Mitnehmer, so dass weniger Drehmoment für den Antrieb der Kurventrommel benötigt wird.

Im Folgenden wird nun auf bevorzugte Ausführungsformen der Erfindung eingegangen. Weitere Ausführungsformen können sich auch aus den abhängigen Ansprüchen, der Figurenbeschreibung sowie den Zeichnungen ergeben.

So kann es gemäß einer Ausführungsform vorgesehen sein, dass der antriebswirksame Abschnitt der Kurventrommel gegenüber einer bezüglich der Drehachse des Abtriebsflansch symmetrischen Anordnung um ein Maß versetzt ist, das etwa 5 bis 30%, insbesondere etwa 7 bis 25%, der Länge des antriebswirksamen Abschnitts der Kurventrommel entspricht. Vorzugsweise kann das genannte Versatzmaß etwa 10 bis 20% und insbesondere etwa 15% der Länge des antriebswirksamen Abschnitts der Kurventrommel entsprechen. Die bevorzugte Größe des Versatzmaßes hängt dabei von der Dimensionierung des Abtriebsflanschs sowie der Kurventrommel ab. Insbesondere hängt das Versatzmaß vom Radius der Kurventrommel, der Steigung der Antriebsnut sowie von der Anzahl der Mitnehmer und deren radialem Abstand zur Drehachse des Abtriebsflanschs ab.

Um die innere Reibung des Antriebs des Rundschalttischs weiter zugunsten einer Reduzierung der benötigten Antriebsleistung reduzieren zu können, kann gemäß einem weiteren Aspekt der Erfindung der Abtriebsflansch mittels einer Kugeldrehverbindung an dem Gehäuse des Rundschalttischs gelagert sein. Die Lagerung des Abtriebsflanschs mittels einer Kugeldrehverbindung an dem Gehäuse des Rundschalttischs kann dabei zusätzlich oder alternativ zu der asymmetrischen Anordnung der Kurventrommel gemäß dem ersten Aspekt der Erfindung zum Einsatz kommen.

Vorzugsweise kann die Kugeldrehverbindung dabei als Vierpunktlager, als Achtpunktlager oder als Kreuzrollenlager ausgeführt sein. Im Unterschied hierzu erfolgt die Lagerung des Abtriebsflanschs bei herkömmlichen Rundschalttischen über Kombinationen von axial und radial wirksamen Lagern. Da die Lagerreibung von Kugeldrehverbindungen in aller Regel geringer ist als die Lagerreibung von kombinierten Axial- und Radiallagern, kann daher durch die Lagerung des Abtriebsflanschs mittels einer Kugeldrehverbindung an dem Gehäuse des Rundschalttischs die benötigte Antriebsleistung weiter reduziert werden.

Im Folgenden wird die Erfindung nun rein exemplarisch unter Bezugnahme auf die Zeichnungen erläutert, in denen:
- Fig. 1a - 1c: eine Ausführungsform eines erfindungsgemäßen Rundschalttischs in unterschiedlichen Ansichten zeigen;
- Fig. 2: die effektiven Hebelarmverhältnisse eines herkömmlichen Rundschalttischs mit symmetrisch angeordneter Kurventrommel veranschaulicht; und
- Fig. 3: die effektiven Hebelarmverhältnisse eines erfindungsgemäßen Rundschalttischs mit asymmetrisch angeordneter Kurventrommel veranschaulicht.

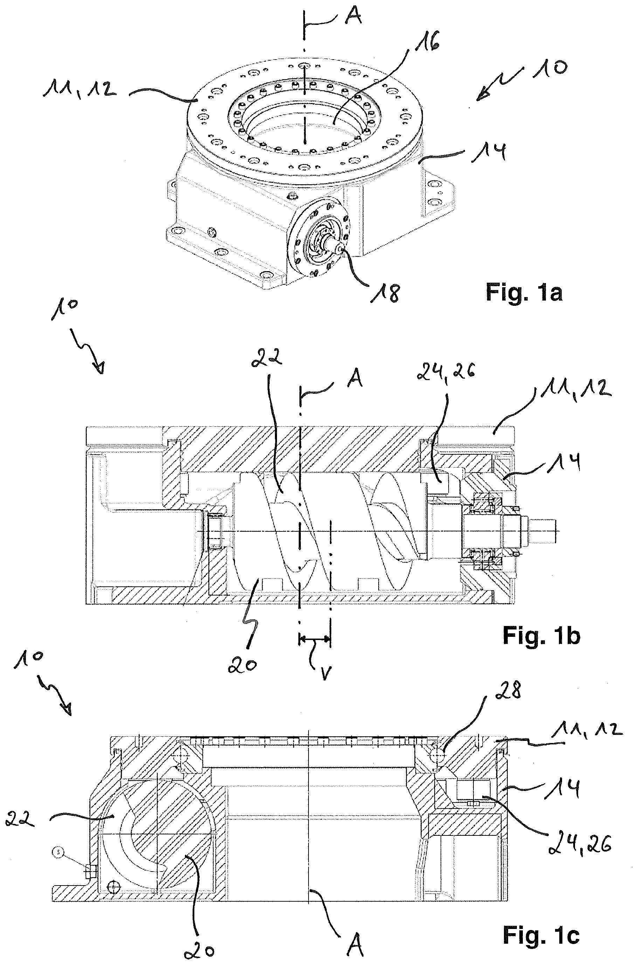

Die Fig. 1a zeigt perspektivisch einen erfindungsgemäßen Rundschalttisch 10, der bei der hier konkret dargestellten Ausführungsform einen als Drehteller 11 ausgebildeten ringförmigen Abtriebsflansch 12 zur Aufnahme von zu bearbeitenden Werkstücken (nicht dargestellt) aufweist. Der Abtriebsflansch 12 bzw. der Drehteller 11 ist dabei um eine Drehachse A drehbar an einem Gehäuse 14 des Rundschalttischs 10 gelagert, so dass der Abtriebsflansch 12 rotatorisch von einer Ruheposition in eine zweite Ruheposition bewegt werden kann. Bei der hier dargestellten Ausführungsform ist der Abtriebsflansch 12 ringförmig ausgebildet und umschließt eine zentrale Öffnung 16, in der sich beispielsweise ein oder mehrere Bearbeitungsmaschinen (nicht dargestellt) zur Bearbeitung von auf dem Drehteller 11 befindlichen Werkstücken befinden können.

Angetrieben wird der Rundschalttisch 10 bzw. dessen Abtriebsflansch 12 von einem hier nicht dargestellten Motor, dessen Welle mit einer Antriebswelle 18 des Rundschalttischs 10 gekoppelt werden kann. Die Antriebswelle 18 treibt dabei eine Kurventrommel 20 an, die in dem Gehäuse 14 des Rundschalttischs 10 drehbar gelagert ist. Hierzu ist in der Kurventrommel 20 eine spiralförmig umlaufende Antriebsnut 22 ausgebildet, in die Mitnehmer 24 eingreifen, die an der - in Gebrauchslage - unteren Seite des Abtriebsflanschs 12 antriebswirksam mit diesem verbunden sind. Die Mitnehmer 24 sind dabei als Rollenbolzen mit Kurvenrollen 26 ausgeführt. Durch die Drehbewegung der Kurventrommel 20 werden somit die in die Antriebsnut 22 eingreifenden Mitnehmer 24 mitgeschleppt, wodurch der Abtriebsflansch 12 in der gewünschten Weise zu einer Drehbewegung angetrieben wird.

Wie der Fig. 1c entnommen werden kann, ist der Abtriebsflansch 12 erfindungsgemäß mittels einer als Vierpunktlager ausgeführten Kugeldrehverbindung 28 an dem Gehäuse 14 des Rundschalttischs 10 gelagert, wodurch in der gewünschten Weise die Lagerreibung zugunsten der Reduzierung der benötigten Antriebsleistung für den Rundschalttisch 10 minimiert werden kann.

Wie der Fig. 1a und insbesondere der Fig. 1b entnommen werden kann, ist die Kurventrommel 20 und insbesondere deren antriebswirksamer Abschnitt, der durch die axiale Erstreckung der Antriebsnut 22 definiert ist, asymmetrisch zu der Drehachse A des Abtriebsflanschs 12 zugunsten der Optimierung der effektiven Hebelarmlänge angeordnet, über die der Abtriebsflansch 12 von der Kurventrommel 20 angetrieben wird. Bei der hier dargestellten Ausführungsform ist dabei der antriebswirksame Abschnitt der Kurventrommel 20 gegenüber einer bezüglich der Drehachse A des Abtriebsflanschs 12 symmetrischen Anordnung um ein Versatzmaß V versetzt, das etwa 15% der Länge des antriebswirksamen Abschnitts der Kurventrommel 20 entspricht. Das konkrete Versatzmaß V hängt jedoch von der Geometrie des jeweiligen Rundschalttischs ab und liegt vorzugsweise im Bereich zwischen 10 und 20% der Länge des antriebswirksamen Abschnitts der Kurventrommel 20.

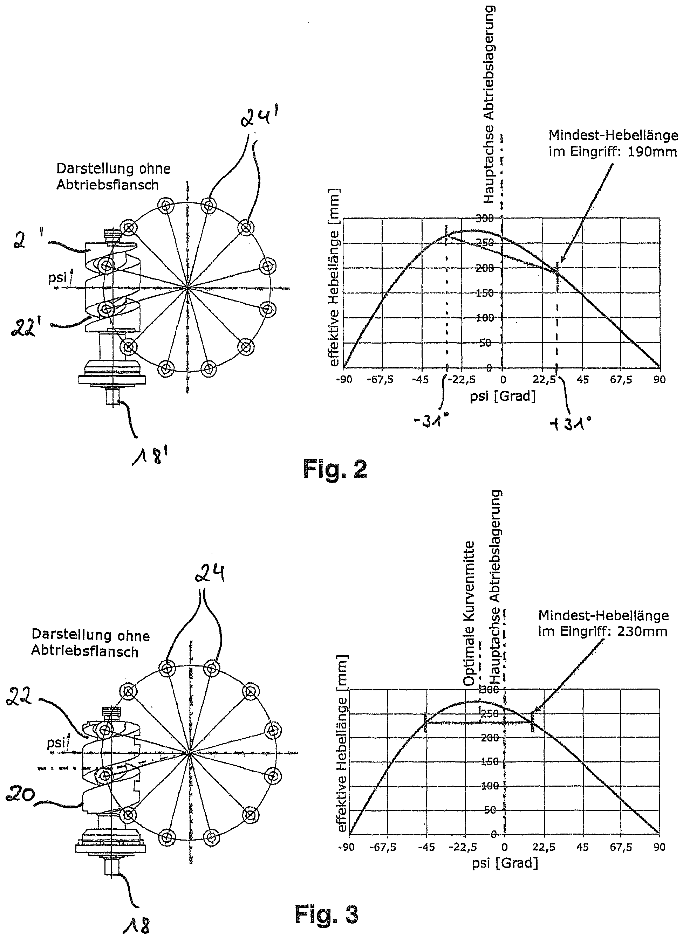

Nachfolgend wird unter Bezugnahme auf die Fig. 2 und 3 die Auswirkung der erfindungsgemäßen asymmetrischen Anordnung der Kurventrommel 20 auf die effektive Hebelarmlänge erläutert. Die Fig. 2 erläutert hierbei die effektive Hebelarmlänge bei einem herkömmlichen Rundschalttisch 10' mit symmetrisch angeordneter Kurventrommel 20', wie dies schematisch in der linken Darstellung der Fig. 2 veranschaulicht ist. Die rechte Darstellung der Fig. 2 veranschaulicht dabei die effektive Hebelarmlänge in Abhängigkeit des Drehwinkels des Abtriebsflanschs, der hier nicht dargestellt ist. Wie dieser Darstellung entnommen werden kann, treten die einzelnen Mitnehmer 24' bei einem Drehwinkel ψ von etwa -31° in die Antriebsnut 22' der Kurventrommel 20' ein, woraufhin sie infolge der Drehbewegung der Kurventrommel 20' von der Antriebsnut 22' mitgeschleppt werden und dieselbe bei einem Winkel ψ von etwa 31° wieder verlassen. Während dieses Eingriffsbereichs nimmt dabei die effektive Hebelarmlänge von einem Anfangswert von etwa 270 mm bis auf einen Maximalwert von etwa 275 mm zu, bevor die effektive Hebelarmlänge anschließend kontinuierlich bis auf eine minimale Hebelarmlänge von etwa 190 mm zu jenem Zeitpunkt abnimmt, bei dem die Mitnehmer 24' die Antriebsnut 22' wieder verlassen. Die effektive Hebelarmlänge lässt sich dabei ermitteln, indem bei jedem Drehwinkel ψ des Abtriebsflanschs der radiale Abstand des jeweiligen Mitnehmers 24' zur Drehachse A in zwei zueinander senkrecht stehende Vektoren zerlegt wird, von denen der eine Vektor senkrecht auf der Berandung der Antriebsnut 22' steht. Der andere Vektor stellt dann die effektive Hebelarmlänge dar.

Werden entsprechende Überlegungen bei einem Rundschalttisch 10 mit asymmetrisch angeordneter Kurventrommel angestellt, so ergeben sich die Verhältnisse, wie sie unter Bezugnahme auf die Fig. 3 dargestellt sind. Wie hierbei dem rechten Diagramm der Fig. 3 entnommen werden kann, treten die Mitnehmer 24 aufgrund der asymmetrischen Anordnung der Kurventrommel 20 bereits bei einem Drehwinkel ψ von etwa -45° in die Antriebsnut 22 ein, wobei sich eine Hebelarmlänge von 230 mm ergibt. Auch hier nimmt die effektive Hebelarmlänge bis auf einen Wert von etwa 275 mm zu, wobei sich diese maximale effektive Hebelarmlänge hier bei einem Winkel ψ von etwa -14° einstellt, von wo aus die effektive Hebelarmlänge kontinuierlich bis zu einem Minimalwert von 230 mm bei einem Winkel ψ von etwa +15° abnimmt.

Im Unterschied zu der symmetrischen Anordnung der Kurventrommel gemäß Fig. 2 ist somit die minimale effektive Hebelarmlänge um 40 mm größer (230 mm bei asymmetrisch angeordneter Kurventrommel gegenüber 190 mm bei symmetrisch angeordneter Kurventrommel), wodurch die maximale Beanspruchung sowohl der Mitnehmer 24 als auch der Kurventrommel 20 reduziert werden kann. Aufgrund der größeren minimalen effektiven Hebelarmlänge wird darüber hinaus auch weniger Drehmoment für den Antrieb des Abtriebsflanschs 12 benötigt, wodurch die für den Antrieb des Rundschalttischs 10 benötigte Antriebsleistung minimiert werden kann.
- 10, 10': Rundschalttisch
- 11: Drehteller
- 12: Abtriebsflansch
- 14: Gehäuse
- 16: Öffnung
- 18, 18': Antriebswelle
- 20,20': Kurventrommel
- 22, 22': Antriebsnut
- 24, 24': Mitnehmer
- 26: Kurvenrolle
- 28: Kugeldrehverbindung

- A: Drehachse
- V: Versatzmaß

Bezugszeichenliste

## Patentansprüche

1. Rundschalttisch (10) mit einem zur Aufnahme eines Werkstücks geeigneten Abtriebsflansch (12), der um eine Drehachse (A) drehbar an einem Gehäuse (14) des Rundschaltischs (10) gelagert und antriebswirksam mit zumindest einem Mitnehmer (24) verbunden ist, der in eine Antriebsnut (22) einer Kurventrommel (20) eingreift, die von einem Motor antreibbar ist, **dadurch gekennzeichnet, dass** die Kurventrommel (20) asymmetrisch zu der Drehachse (A) des Abtriebsflanschs (12) angeordnet ist.

2. Rundschalttisch nach Anspruch 1,
**dadurch gekennzeichnet, dass**
ein antriebswirksamer Abschnitt der Kurventrommel (20), der durch die axiale Erstreckung der Antriebsnut (22) definiert ist, asymmetrisch zu der Drehachse (A) des Abtriebsflanschs (12) angeordnet ist.

3. Rundschalttisch nach Anspruch 2,
**dadurch gekennzeichnet, dass**
der antriebswirksame Abschnitt der Kurventrommel (20) gegenüber einer bezüglich der Drehachse (A) des Abtriebsflanschs (12) symmetrischen Anordnung um ein Maß versetzt ist, das etwa 5 bis 30% der Länge des antriebswirksames Abschnitts der Kurventrommel (20) entspricht, insbesondere etwa 7 bis 25%, bevorzugt etwa 10 bis 20% und insbesondere bevorzugt etwa 15% der Länge des antriebswirksames Abschnitts der Kurventrommel (20) entspricht.

4. Rundschalttisch nach zumindest einem der vorstehenden Ansprüche,
dadurch **gekennzenet**, dass
der Abtriebsflansch (12) mittels einer Kugeldrehverbindung (28) an dem Gehäuse (14) des Rundschaltischs (10) gelagert ist.

5. Rundschalttisch nach zumindest einem der vorstehenden Ansprüche,
**dadurch gekennzeichnet, dass**
die Kugeldrehverbindung (28) als Vierpunktlager ausgeführt ist.

6. Rundschalttisch nach zumindest einem der Ansprüche 1 bis 4,
**dadurch gekennzeichnet, dass**
die Kugeldrehverbindung (28) als Achtpunktlager ausgeführt ist.

7. Rundschalttisch nach zumindest einem der Ansprüche 1 bis 4,
**dadurch gekennzeichnet, dass**
die Kugeldrehverbindung (28) als Kreuzrollenlager ausgeführt ist.

## Claims

1. A rotary indexing table (10) having an output flange (12) which is suitable for receiving a workpiece, which is supported rotatably about an axis of rotation (A) at a housing (14) of the rotary indexing table (10) and which is drive-effectively connected to at least one entrainer (24) which engages into a drive groove (22) of a barrel cam (20) which is drivable by a motor,
**characterized in that**
the barrel cam (20) is arranged asymmetrically to the axis of rotation (A) of the output flange (12).

2. A rotary indexing table in accordance with claim 1,
**characterized in that**
a drive-effective section of the barrel cam (20), which is defined by the axial extent of the drive groove (22), is arranged asymmetrically to the axis of rotation (A) of the output flange (12).

3. A rotary indexing table in accordance with claim 2,
**characterized in that**
the drive-effective section of the barrel cam (20) is offset with respect to an arrangement which is symmetrical with respect to the axis of rotation (A) of the output flange (12) by an amount which corresponds to approximately 5 to 30% of the length of the drive-effective section of the barrel cam (20), in particular to approximately 7 to 25%, preferably to approximately 10 to 20%, and in particular preferably to approximately 15% of the length of the drive-effective section of the barrel cam (20).

4. A rotary indexing table in accordance with at least one of the preceding claims,
**characterized in that**
the output flange (12) is supported at the housing (14) of the rotary indexing table (10) by means of a ball bearing supported slewing ring (28).

5. A rotary indexing table in accordance with at least one of the preceding claims,
**characterized in that**
the ball bearing supported slewing ring (28) is designed as a four-point bearing.

6. A rotary indexing table in accordance with at least one of the claims 1 to 4,
**characterized in that**
the ball bearing supported slewing ring (28) is designed as an eight-point bearing.

7. A rotary indexing table in accordance with at least one of the claims 1 to 4,
**characterized in that**
the ball bearing supported slewing ring (28) is designed as a cross roller bearing.

## Revendications

1. Table de transfert circulaire (10) comprenant une bride de sortie (12) apte à recevoir une pièce à œuvrer et montée sur un boîtier (14) de la table de transfert circulaire (10) de façon mobile en rotation autour d'un axe de rotation (A) et reliée en termes d'entraînement à au moins un ergot d'entraînement (24) qui s'engage dans une rainure d'entraînement (22) d'un tambour à cames (20) pouvant être entraîné par un moteur,
**caractérisée en ce que**
le tambour à cames (20) est disposé de manière asymétrique par rapport à l'axe de rotation (A) de la bride de sortie (12).

2. Table de transfert circulaire selon la revendication 1,
**caractérisée en ce que**
une portion active en entraînement du tambour à cames (20), qui est définie par l'extension axiale de la rainure d'entraînement (22), est disposée de manière asymétrique par rapport à l'axe de rotation (A) de la bride de sortie (12).

3. Table de transfert circulaire selon la revendication 2,
**caractérisée en ce que**
la portion active en entraînement du tambour à cames (20) est décalée par rapport à une disposition symétrique à l'axe de rotation (A) de la bride de sortie (12) d'une valeur qui correspond à environ 5 à 30 % de la longueur de la portion active en entraînement du tambour à cames (20), en particulier à environ 7 à 25 %, de préférence à environ 10 à 20 %, et de manière particulièrement préférée à environ 15 % de la longueur de la portion active en entraînement du tambour à cames (20).

4. Table de transfert circulaire selon l'une au moins des revendications précédentes,
**caractérisée en ce que**
la bride de sortie (12) est montée sur le boîtier (14) de la table de transfert circulaire (10) au moyen d'une couronne d'orientation à billes (28).

5. Table de transfert circulaire selon l'une au moins des revendications précédentes,
**caractérisée en ce que**
la couronne d'orientation à billes (28) est conçue comme un roulement à quatre points.

6. Table de transfert circulaire selon l'une au moins des revendications 1 à 4,
**caractérisée en ce que**
la couronne d'orientation à billes (28) est conçue comme un roulement à huit points.

7. Table de transfert circulaire selon l'une au moins des revendications 1 à 4,
**caractérisée en ce que**
la couronne d'orientation à billes (28) est conçue comme un roulement à rouleaux croisés.
